# EUROPÄISCHE PATENTANMELDUNG

(11) **EP 2 017 552 A2**
(43) Veröffentlichungstag der Anmeldung: **21.01.2009**
(21) Anmeldenummer: 08012358.1
(22) Anmeldetag: 09.07.2008
(51) Int. Cl.: F24J 2/10, F24J 2/46

(54) **Sollarkollektor und Vorrichtung zur Temperaturbegrenzung in einem Solarkollektor**

(30) Priorität: 19.07.2007 DE 102007033565
(71) Anmelder: Robert Bosch GmbH, 70442 Stuttgart (DE)
(72) Erfinder: Clement, Uwe, 73114 Schlat (DE); Oertel, Kai, 70569 Stuttgart (DE)

(57) **Zusammenfassung**

Die Erfindung betrifft eine Vorrichtung zur Temperaturbegrenzung in einem Solarkollektor 1, insbesondere eines CPC-Solarkollektors, bei Erreichen einer vorgegebenen Maximalgröße, insbesondere einer Maximaltemperatur und einen Solarkollektor 1 mit einer erfindungsgemäßen Vorrichtung.

Es ist eine Aufgabe der Erfindung, die auf den Solarkollektor 1 einwirkende Solarstrahlung S bei Erreichen einer vorgegebenen Temperatur in dem Solarkollektor 1 zu begrenzen, um so die Temperaturbelastung des Solarkollektors 1 und des durchströmenden Heizfluids zu begrenzen. Weiter ist es eine Aufgabe der vorliegenden Erfindung, einen Solarkollektor 1 mit einer solchen Vorrichtung zu schaffen.

Gekennzeichnet ist die Vorrichtung dadurch, dass schaltbare Mittel 6 zum Verringern der auf die Absorbereinheit 2 auftreffenden Solarstrahlung S spätestens bei Erreichen der Maximalgröße an der Absorbereinheit 2 vorhanden sind. Der Solarkollektor 1 ist dadurch gekennzeichnet, dass dieser eine erfindungsgemäße Vorrichtung aufweist.

## Beschreibung

Die Erfindung betrifft eine Vorrichtung zur Temperaturbegrenzung in einem Solarkollektor, insbesondere eines CPC-Solarkollektors, bei Erreichen einer vorgegebenen Maximalgröße, insbesondere einer Maximaltemperatur, nach dem Oberbegriff des Patentanspruches 1 und einen Solarkollektor mit einer erfindungsgemäßen Vorrichtung nach Anspruch 10.

Allgemein bekannt sind thermische Solarkollektoren, welche durch eine einfallende Solarstrahlung ein den Solarkollektor durchströmendes Heizfluid erwärmen. Diese thermischen Solarkollektoren sind unter Berücksichtigung einer Höchsttemperatur in ihrem Kollektor ausgelegt. Insbesondere bekannt sind Solarkollektoren mit fest montierten Reflektorspiegeln, sogenannte CPC-Solarkollektoren. Diese erreichen gegenüber z. B. Flachkollektoren höhere Maximaltemperaturen des Heizfluids. Insbesondere bei maximaler solarer Einstrahlung, geringer Durchströmung und geringen Abstrahlverlusten bei hohen Umgebungstemperaturen wird diese Höchsttemperatur, welche im Bereich von 180 - 230°C und darüber hinaus liegen kann, erreicht und teilweise überschritten.

Um eine Schädigung des Solarkollektors, seiner Bestandteile und/oder eines Solarfluids zu vermeiden, werden alle Bauteile auf diese maximale Höchsttemperatur ausgelegt. Kritisch ist, dass sich das Heizfluid ab einer vorbestimmten Grenztemperatur zersetzen kann. Um dies zu vermeiden, wird eine Regelvorrichtung eingesetzt, welche den Volumenstrom, insbesondere durch eine Solarkollektorkreispumpe, regelt. Die Regelung ist zumeist sehr aufwendig und bei Ausfall der Regelung kann der Solarkollektor beschädigt oder gar zerstört werden.

Der Erfindung liegt die Aufgabe zugrunde, die Temperatur in dem Solarkollektor zuverlässig zu begrenzen, um so die Temperaturbelastung des Solarkollektors und des durchströmenden Heizfluids zu begrenzen. Weiter ist es eine Aufgabe der vorliegenden Erfindung, einen Solarkollektor mit einer solchen Vorrichtung zu schaffen.

Erfindungsgemäß wird dies mit den Merkmalen der Patentansprüche 1 und 10 gelöst. Vorteilhafte Weiterbildungen sind den Unteransprüchen zu entnehmen.

Die Vorrichtung zur Temperaturbegrenzung bei Erreichen einer vorgegebenen Maximalgröße, insbesondere einer Maximaltemperatur, ist dadurch gekennzeichnet, dass bei der Vorrichtung zur Temperaturbegrenzung in einem Solarkollektor, insbesondere in einem CPC-Solarkollektor, mit einer Einstrahleinheit, durch deren Einstrahlbereich eine Solarstrahlung direkt und/oder fokussiert über eine Reflektoreinheit indirekt auf eine Absorbereinheit trifft, und einer Lagereinheit zum Lagern der Reflektoreinheit relativ zu der Absorbereinheit, weiter schaltbare Mittel zum Verringern der auf die Absorbereinheit auftreffenden Solarstrahlung spätestens bei Erreichen der Maximalgröße an der Absorbereinheit vorhanden sind.

In einer Ausführungsform ist vorgesehen, dass die Mittel als thermomechanische Mittel umfassend Bimetalle ausgebildet sind, welche in Abhängigkeit einer Temperatur, insbesondere der Maximaltemperatur, eine Formveränderung, insbesondere eine reversible Formveränderung wie eine Längenveränderung oder eine Längenausdehnung, erfahren.

In noch einer weiteren Ausführungsform ist weiter vorgesehen, dass die thermomechanischen Mittel in die Lagereinheit und/oder die Reflektoreinheit zumindest teilweise integriert bzw. daran angebaut sind.

Ein Weiterbildung der Erfindung sieht vor, dass die in die Lagereinheit integrierten thermomechanischen Mittel durch deren Formveränderung, insbesondere deren Längenausdehnung eine defokussierende Positionsveränderung der Reflektoreinheit relativ zu der Absorbereinheit bewirken, um die indirekte Solareinstrahlung zumindest teilweise neben die Absorbereinheit zu reflektieren. Durch die Ausdehnung verändert sich zum Beispiel die Ausrichtung durch eine einseitig drehbare und anderseitig verschiebbare Lagerung.

Eine andere Weiterbildung sieht vor, dass die in die Reflektoreinheit integrierten thermomechanischen Mittel durch die Formveränderung eine zumindest teilweise Formveränderung der Reflektoreinheit bewirken, so dass zumindest ein Teil der direkt auf die Absorbereinheit auftreffende Solareinstrahlung abgehalten und/oder ein Teil der indirekt auf die Absorbereinheit auftreffende Solareinstrahlung neben die Absorbereinheit gelenkt ist. Durch eine entsprechende Lagerung der Reflektoreinheit können sich zum Beispiel nur Teilbereiche der Reflektoreinheit auslängen, während andere durch die Lagerung im Wesentlichen in Position gehalten sind.

In einem Ausführungsbeispiel ist die Reflektoreinheit im Wesentlichen aus dem thermomechanischen Mittel hergestellt, zum Beispiel als Spiegelrinne aus einem thermomechanischen Material. Es können aber auch nur Teilbereiche der Reflektoreinheit aus diesem thermomechanischen Material wie einem Bimetall hergestellt sein.

In einer Weiterbildung der Erfindung sind die thermomechanischen Mittel thermisch wirkverbunden mit der Absorbereinheit ausgebildet. Dadurch kann zum Beispiel Wärme an der Absorbereinheit auf die thermomechanischen Mittel übertragen werden, wodurch die Formveränderung der thermomechanischen Mittel verursacht wird.

In noch einer anderen Weiterbildung der Erfindung ist vorgesehen, dass die thermomechanischen Mittel nach Unterschreiten der Maximalgröße im Wesentlichen in die Form vor dem Zuschalten der thermomechanischen Mittel zurückkehren.

Eine weitere Ausführungsform sieht vor, dass die Absorbereinheit zwischen dem Einstrahlbereich und der Reflektoreinheit in einem von der Reflektoreinheit fokussierten Bereich und von dieser zumindest teilweise umgeben angeordnet ist, wobei durch die thermomechanischen Mittel die Reflektoreinheit zumindest teilweise formveränderbar oder krümmbar ist, um den Einstrahlbereich zu verringern und/oder einen Fokussierbereich zu verändern.

Der Solarkollektor, insbesondere ein CPC-Solarkollektor, ist dadurch gekennzeichnet, dass dieser eine erfindungsgemäße Vorrichtung zur Temperaturbegrenzung aufweist.

Durch die schaltbaren Mittel zum Verringern der auf die Absorbereinheit auftreffenden Solarstrahlung und der damit verbundenen Defokussierung des Reflektorspiegels bei Erreichen einer Grenztemperatur im Solarkollektor wird die dem Absorber, genauer dem Absorberrohr, zugeführte Wärmestrahlung, die der Solarstrahlung inhärent ist, begrenzt. Durch die schaltbaren Mittel ist die Verwendung weniger aufwendiger Kunststoffe als Werkstoff und/oder eines weniger aufwendigen Heizfluid möglich. Die schaltbaren Mittel können Bimetallfedern als Stellglieder umfassen und ermöglichen so einen Stellmechanismus, der ohne den Einsatz von störanfälligen elektrischen Stellelementen und/oder Regelelektronik auskommt. Auf diese Weise kann ein Versagen oder eine Beschädigung des Solarkollektors auch bei Ausfall einer Stromversorgung für die schaltbaren Mittel vermieden werden. Die schaltbaren Mittel, welche hier z. B. mechanisch oder thermomechanisch ausgebildet sind, lassen sich problemlos bei herkömmlichen Solarkollektoren wie Flachkollektorsystemen nachrüsten, da dort keine elektrischen Anschlüsse vorgesehen sind und diese somit nicht nachgerüstet werden müssen.

Die Zeichnungen stellen mehrere Ausführungsbeispiele der Erfindung dar und zeigen in mehreren Figuren:
- Fig. 1A: schematisch einen Querschnitt durch einen Ausschnitt eines erfindungsgemäßen Solarkollektors in einem Zustand vor einem Schalten von schaltbaren Mitteln,
- Fig. 1B: schematisch einen Querschnitt des Ausschnitts nach Fig. 1A nach Schalten der schaltbaren Mittel, d. h. nach Erreichen einer Grenz- oder Maximaltemperatur,
- Fig. 2A: schematisch einen Querschnitt durch einen Ausschnitt eines zweiten Ausführungsbeispiels eines erfindungsgemäßen Solarkollektors in einem Zustand vor einem Schalten von schaltbaren Mitteln und
- Fig. 2B: schematisch einen Querschnitt des Ausschnitts nach Fig. 2A nach Schalten der schaltbaren Mittel, d. h. nach Erreichen einer Grenz- oder Maximaltemperatur.

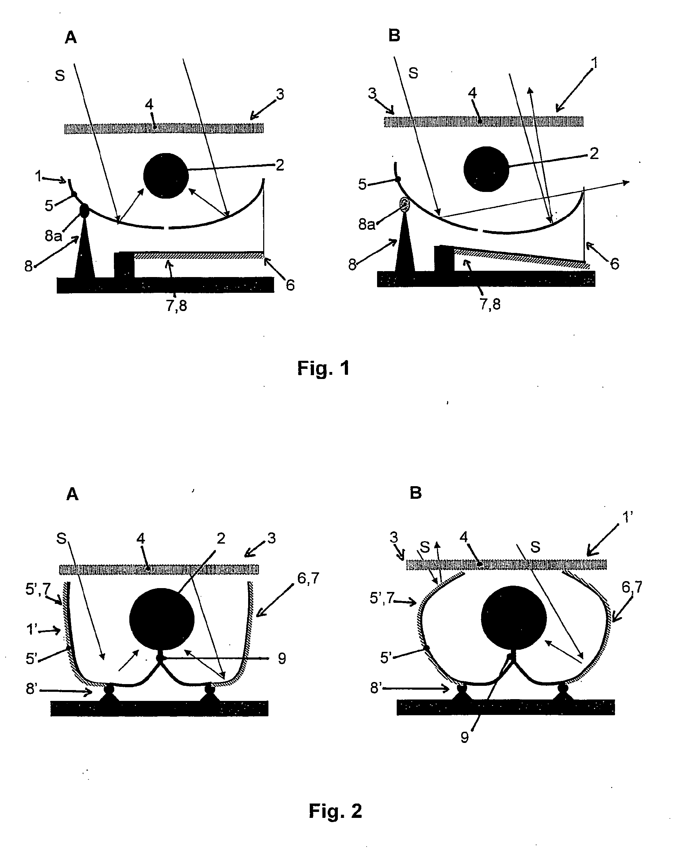

Fig. 1 zeigt schematisch einen Querschnitt durch einen Ausschnitt eines erfindungsgemäßen Solarkollektors 1. Der Solarkollektor 1 umfasst eine Absorbereinheit 2, die hier als Zylinderrohr ausgebildet ist. Weiter umfasst der Solarkollektor 1 eine Einstrahleinheit 3 mit einem Einstrahlbereich 4 und einer Reflektoreinheit 5. Durch den Einstrahlbereich 4 gelangt eine Solarstrahlung (gekennzeichnet durch Pfeile S) direkt und/oder indirekt, reflektiert über die Reflektoreinheit 5 auf die Absorbereinheit 2 (das Absorberrohr). Der Einstrahlbereich 4 kann durch einen Öffnung oder einen transparenten Bereich gebildet sein. Weiter weist der Solarkollektor 1 schaltbare Mittel 6 auf, welche die auf die Absorbereinheit 2 auftreffende Solarstrahlung S bei Erreichen der Maximalgröße - der Maximaltemperatur - an der Absorbereinheit 2 verringern. Die Maximalgröße kann auch eine andere Größe wie ein Druck, ein Massenanteil, ein Mengenverhältnis, ein Volumen etc. sein. Die schaltbaren Mittel 6 sind vorliegend als thermomechanische Mittel 7 wie Bimetalle und dergleichen ausgebildet. Der Solarkollektor 1 ist in einem Zustand vor einem (Zu-)Schalten der schaltbaren Mittel 6 dargestellt, d. h. die Maximalgröße ist noch nicht erreicht. Die Absorbereinheit 2 ist zwischen dem Einstrahlbereich 4 und der Reflektoreinheit 5 angeordnet. Hier ist die Reflektoreinheit 5, die durch entsprechende Formgebung einen Fokussierbereich definiert, als eine montierbare Parabolspiegelrinne ausgebildet, die sich entlang der als Absorberrohr ausgebildeten Absorbereinheit 2 erstreckt, welche etwa entlang des Fokussierbereichs der Parabolspiegelrinne verläuft. Die Parabolspiegelrinne ist über eine Lagereinheit 8 gelagert. Dabei ist die Parabolspiegelrinne über die Lagereinheit 8 um eine Lagerstelle 8a einseitig drehbar gelagert (linke Seite der Fig.). Auf der anderen Seite ist die Parabolspiegelrinne bewegbar, insbesondere verschiebbar, gelagert. Auf der bewegbaren Seite (rechte Seite in der Fig.) ist die Parabolspiegelrinne über das oder die thermomechanische(n) Mittel 7 gelagert, welche ein beliebiges thermomechanisches Bauteil wie ein Bimetall sein können. In dem dargestellten Zustand ist die Reflektoreinheit 5 oder der Spiegel bzw. die Spiegelrinne oder die Parabolspiegelrinne fokussierend zu dem Absorberrohr ausgerichtet, so dass die auf die Reflektoreinheit 5 einfallende Solarstrahlung S im Bereich des Absorberrohrs fokussiert wird. Durch die einfallende Solarstrahlung S wird das Absorberrohr (samt Inhalt) oder insgesamt der Solarkollektor 1 erwärmt. Erreicht nun der Solarkollektor 1 eine vorbestimmte Grenz- oder Maximaltemperatur (Maximalgröße), so ist eine Regelung zum Schutz des Solarkollektors 1 erforderlich. Hierzu schalten die schaltbaren Mittel 6, wie in Fig. 1B dargestellt.

Fig. 1B zeigt schematisch einen Querschnitt des Ausschnitts nach Fig. 1A nach Schalten der schaltbaren Mittel 6, d. h. nach Erreichen einer Grenz- oder Maximaltemperatur in dem Solarkollektor 1. Für gleiche oder ähnliche Bauteile werden in den Zeichnungen einheitliche Bezugszeichen verwendet. Auf eine ausführliche Beschreibung der Bauteile wird entsprechend verzichtet.

Durch die Erwärmung des Solarkollektors 1 verformt sich das thermomechanische Bauteil, welches in der Lagereinheit 8 integriert ist (rechte Seite), und lenkt den Reflektor durch eine entsprechende Wirkverbindung aus. Durch die einseitig drehbare Lagerung wird die Reflektoreinheit 5 um die entsprechende Lagerstelle 8a gedreht. Hierdurch wird eine Defokussierung realisiert, so dass ein Teil der einfallenden Solarstrahlung S nicht auf das Absorberrohr trifft und dieses somit nicht weiter erwärmt wird.

Fig. 2A zeigt schematisch einen Querschnitt durch einen Ausschnitt eines zweiten Ausführungsbeispiels des erfindungsgemäßen Solarkollektors 1' in einem Zustand vor einem Schalten von schaltbaren Mitteln 6. In diesem Ausführungsbeispiel ist die Reflektoreinheit 5 zumindest teilweise aus einem thermomechanischen Mittel 7, genauer einem thermomechanischem Material wie einem Bimetall, aufgebaut. Über die Lagereinheit 8' ist die als Reflektor ausgebildete Reflektoreinheit 5' so in dem Solarkollektor 1' fixiert, dass nur ein vorbestimmter Bereich oder Teil des Reflektors sich aufgrund der Erwärmung ausdehnen kann. Über einen Steg 9 ist der Reflektor mit der Absorbereinheit 2, die hier als Absorberrohr mit etwa kreisförmigem Querschnitt ausgebildet ist, verbunden. Diese Verbindung überträgt zum Beispiel die Wärme von dem Absorberrohr zu dem Reflektor. Entsprechend dehnt sich in Abhängigkeit der Absorberrohrtemperatur der Reflektor, genauer die entsprechenden Teile des Reflektors, aus bzw. ändert seine Form. Durch die Ausstrahlung verkleinert sich der Bereich, durch den Solarstrahlung S auf den Reflektor und/oder das Absorberrohr gelangt, wie in Fig. 2B deutlicher zu sehen.

Fig. 2B schematisch einen Querschnitt des Ausschnitts nach Fig. 2A nach Schalten der schaltbaren Mittel 6, d. h. nach Erreichen einer Grenz- oder Maximaltemperatur. Durch das Schalten der schaltbaren Mittel 6, genauer der thermomechanischen Mittel 7, verformt sich der Reflektor entsprechend und schränkt den Bereich ein, durch welchen Solarstrahlung S auf das Absorberrohr oder den Reflektor auftrifft. Als Folge hiervon wird das Absorberrohr in geringerem Maße durch die Solarstrahlung S erwärmt. Kühlt sich der Solarkollektor 1 ab, so nehmen die entsprechenden Bauteile des Solarkollektors 1, z. B. der Reflektor und die schaltbaren Mittel 6, im Wesentlichen ihre ursprüngliche Form vor dem Schalten ein. Bevorzugt sind die schaltbaren Mittel 6 bzw. die thermomechanischen Mittel 7 als Materialen mit Formgedächtnis ausgebildet.

## Patentansprüche

1. Vorrichtung zur Temperaturbegrenzung in einem Solarkollektor (1), insbesondere in einem CPC-Solarkollektor, bei Erreichen einer vorgegebenen Maximalgröße, insbesondere einer Maximaltemperatur, mit
einer Einstrahleinheit (3), durch deren Einstrahlbereich (4) eine Solarstrahlung (S) direkt und/oder fokussiert über eine Reflektoreinheit (5) indirekt auf eine Absorbereinheit (2) trifft, und
einer Lagereinheit (8) zum Lagern der Reflektoreinheit (5) relativ zu der Absorbereinheit (2),
**dadurch gekennzeichnet, dass**
weiter schaltbare Mittel (6) zum Verringern der auf die Absorbereinheit (2) auftreffenden Solarstrahlung (S) spätestens bei Erreichen der Maximalgröße an der Absorbereinheit (2) vorhanden sind.

2. Vorrichtung zur Temperaturbegrenzung nach dem Anspruch 1,
**dadurch gekennzeichnet, dass**
die Mittel (6) als thermomechanische Mittel (7) umfassend Bimetalle ausgebildet sind, welche in Abhängigkeit einer Temperatur, insbesondere der Maximaltemperatur, eine Formveränderung, insbesondere eine Längenveränderung, erfahren.

3. Vorrichtung zur Temperaturbegrenzung nach den Ansprüchen 1 oder 2,
**dadurch gekennzeichnet, dass**
die thermomechanischen Mittel (7) in die Lagereinheit (8) und/oder die Reflektoreinheit (5) integriert sind.

4. Vorrichtung zur Temperaturbegrenzung nach den Ansprüchen 1 bis 3,
**dadurch gekennzeichnet, dass**
die in die Lagereinheit (8) integrierten thermomechanischen Mittel (7) durch deren Formveränderung eine defokussierende Positionsveränderung der Reflektoreinheit (5) relativ zu der Absorbereinheit (2) bewirken, um die indirekte Solareinstrahlung (S) zumindest teilweise neben die Absorbereinheit (2) zu reflektieren.

5. Vorrichtung zur Temperaturbegrenzung nach den Ansprüchen 1 bis 4,
**dadurch gekennzeichnet, dass**
die in die Reflektoreinheit (5) integrierten thermomechanischen Mittel (7) durch die Formveränderung eine zumindest teilweise Formveränderung der Reflektoreinheit (5) bewirken, so dass zumindest ein Teil der direkt auf die Absorbereinheit (2) auftreffenden Solareinstrahlung (S) abgehalten und/oder ein Teil der indirekt auf die Absorbereinheit (2) auftreffende Solareinstrahlung (S) neben die Absorbereinheit (2) gelenkt ist.

6. Vorrichtung zur Temperaturbegrenzung nach den Ansprüchen 1 bis 5,
**dadurch gekennzeichnet, dass**
die Reflektoreinheit (5) im Wesentlichen aus dem thermomechanischen Mittel (7) hergestellt ist.

7. Vorrichtung zur Temperaturbegrenzung nach den Ansprüchen 1 bis 6,
**dadurch gekennzeichnet, dass**
die thermomechanischen Mittel (7) thermisch wirkverbunden mit der Absorbereinheit (2) ausgebildet sind.

8. Vorrichtung zur Temperaturbegrenzung nach den Ansprüchen 1 bis 7,
**dadurch gekennzeichnet, dass**
die thermomechanischen Mittel (7) nach Unterschreiten der Maximalgröße im Wesentlichen in die Form vor dem Zuschalten der thermomechanischen Mittel (7) zurückkehren.

9. Vorrichtung zur Temperaturbegrenzung nach den Ansprüchen 1 bis 8,
**dadurch gekennzeichnet, dass**
die Absorbereinheit (2) zwischen dem Einstrahlbereich (4) und der Reflektoreinheit (5) in einem von der Reflektoreinheit (5) fokussierten Bereich und von dieser zumindest teilweise umgeben angeordnet ist, wobei durch die thermomechanischen Mittel (7) die Reflektoreinheit (5) zumindest teilweise krümmbar ist, um den Einstrahlbereich (4) zu verringern und/oder einen Fokussierbereich zu verändern.

10. Solarkollektor (1), insbesondere ein CPC-Solarkollektor, mit einer Vorrichtung zur Temperaturbegrenzung nach einem der Ansprüche 1 bis 9.
